# EUROPÄISCHE PATENTSCHRIFT

(11) **EP 0 569 370 B1**
(45) Veröffentlichungstag und Bekanntmachung des Hinweises auf die Patenterteilung: **21.09.1994**
(21) Anmeldenummer: 92901069.2
(22) Anmeldetag: 18.12.1991
(51) Int. Cl.: B24B 23/02, B25F 5/02, B27B 17/00, B24B 55/00

(54) **HANDWERKZEUGMASCHINE**
HAND-HELD POWER TOOL
OUTIL ELECTRIQUE A MAIN

(30) Priorität: 31.01.1991 DE 4102838
(43) Veröffentlichungstag der Anmeldung: 18.11.1993
(73) Patentinhaber: ROBERT BOSCH GMBH, 70442 Stuttgart (DE)
(72) Erfinder: KIRN, Manfred, D-7000 Stuttgart 80 (DE); BORST, Erich, D-7022 Leinfelden-Echterdingen 1 (DE); SCHAAL, Günter, D-7022 Leifelden-Echterdingen (Musberg) (DE); STÄBLER, Manfred-Wilhelm, D-7022 Leinfelden-Echterdingen 2 (DE); EICHER, Bernhard, D-7024 Filderstadt 4 (DE)
(86) Internationale Anmeldenummer: DE9100988
(87) Internationale Veröffentlichungsnummer: WO9213678

(56) Entgegenhaltungen:
- DE-A- 4 021 277

## Beschreibung

Die Erfindung geht aus von einer Handwerkzeugmaschine, insbesondere einer handgeführten Winkelschleifmaschine, der im Oberbegriff des Anspruchs 1 definierten Gattung.

Handwerkzeugmaschinen, insbesondere handgeführte Winkelschleifmaschinen, sind heute ausschließlich mit einem Ein- und Ausschalter für den elektrischen Antrieb ausgerüstet, der über die Schalterleiste betätigt wird. Die Schalterleiste liegt an der Handgriffunterseite und wird beim Umfassen des Handgriffes von mindestens einem Finger betätigt und während des Arbeitens mit der Maschine betätigt gehalten. Die ergonomische Gestaltung des Handgriffes, wie Querschnittsform und Neigungswinkel zur Geräteachse, ist für eine einzige Arbeitsstellung der Maschine optimiert.

Einige Handwerkzeugmaschinen werden in mehr als einer Arbeitsstellung für verschiedene Arbeitsgänge verwendet. Eine Winkelschleifmaschine z.B. wird neben dem Schleifen oder Schrubben auch für Trennarbeiten, z.B. zum Trennen von Steinplatten, verwendet. Die vorstehend angesprochene optimale Arbeitsstellung ist üblicherweise für die Arbeitsstellung Schrubben gegeben, in welcher die Schleifscheibe nach unten weist, also in etwa parallel zur Schalterleiste liegt. Bei Trennarbeiten hingegen wird die Winkelschleifmaschine um 90° um ihre Längsachse nach links oder rechts gedreht, so daß die Trennscheibe etwa senkrecht zum Werkstück steht. Durch diese Drehung kommt der Handgriff zusammen mit der Schalterleiste in eine ungünstige Lage zur umfassenden Hand. Wird die Maschine nach links gedreht und der Handgriff mit der rechten Hand umfaßt, kommt die Schalterleiste im Handballen zu liegen. Wird die Maschine nach rechts gedreht und mit der rechten Hand gehalten, kann die Schalterleiste nur noch mit dem Daumen betätigt und gehalten werden. In beiden Fällen ist ein sicheres und ermüdungsfreies Halten der Schalterleiste nicht möglich. Außerdem kann im Gefahrensfall im Hinblick auf die Lage von Einschaltsperre und Einschaltverriegelung nicht schnell genug reagiert und abgeschaltet werden.

Um diesen Nachteil zu umgehen, ist bereits bei einer Handwerkzeugmaschine der eingangs genannten Art der Gehäuseteil Handgriff oder der Gehäuseteil Getriebekopf am Motorgehäuse drehbar gehalten und kann in definierten Drehstellungen für eine jeweils ergonomisch günstige Arbeitshaltung mittels einer Fixiervorrichtung festgelegt werden.

Bei einer bereits vorgeschlagenen Handwerkzeugmaschine dieser Art (EP-A-00539382 gemäß Art. 54 (3) EPÜ) wird die Drehbarkeit des Handgriffs bzw. des Getriebekopfs dadurch erreicht, daß das schalenförmige Gehäuse des drehbaren Gehäuseteils mit einem radial vorspringenden Bund versehen ist, der in eine Umlaufnut am Motorgehäuse eingreift. Die manuell betätigbare Fixiervorrichtung weist eine Verriegelungsvorrichtung zur Verriegelung des drehbaren Gehäuseteils am Motorgehäuse und eine Klemmvorrichtung zum Verspannen des drehbaren Gehäuseteils am Motorgehäuse auf. Die Verriegelungsvorrichtung weist dabei mindestens zwei im Motorgehäuse um einen Drehwinkel zueinander versetzt angeordnete Verriegelungsnuten und einen im Schalengehäuse des drehbaren Gehäuseteils schwenkbaren Verriegelungsnocken auf, der formschlüssig in jeweils eine der Verriegelungsnuten einzugreifen vermag. Die Klemmvorrichtung weist eine quer zu einem Längsschlitz im vorspringenden Bund des Schalengehäuses sich erstreckende Spannschraube auf, die mittels eines Spannhebels in einem Gewinde verschraubbar ist und die die beidseitig des Längsschlitzes ausgebildeten Gehäusebereiche des Schalengehäuses unter Reduzierung der Breite des Längsschlitzes aufeinanderzu zu bewegen vermag. Die zur Verriegelungsvorrichtung zusätzliche Klemmvorrichtung ist deshalb erforderlich, damit einerseits eine leichte Drehbeweglichkeit des drehbaren Gehäuseteils am Motorgehäuse sichergestellt ist und andererseits bei Arbeiten mit der Handwerkzeugmaschine in den unterschiedlichen Relativstellungen von Motorgehäuse und drehbarem Gehäuseteil immer eine steife Verbindung dieser Gehäuseteile gegeben ist.

### Vorteile der Erfindung

Die erfindungsgemäße Handwerkzeugmaschine mit den kennzeichnenden Merkmalen des Anspruchs 1 hat demgegenüber den Vorteil, daß eine gute Drehführung des drehabren Gehäuseteils am Motorgehäuse erreicht wird, die einerseits leichtgängig und andererseits eine Relativbeweglichkeit von Maschinengehäuse und drehbarem Gehäuseteil in Längsrichtung zueinander sicher ausschließt. Damit kann auf eine zur Verriegelungsvorrichtung zusätzliche Klemmvorrichtung verzichtet werden. Trotz leichtgängiger Drehbeweglichkeit des drehbaren Gehäuseteils ist in jeder Verriegelungsstellung ein formsteifes Maschinengehäuse gegeben, das gut zu hantieren ist. Durch den Wegfall der Klemmvorrichtung wird die Handwerkzeugmaschine konstruktiv einfacher, was sich in den geringeren Herstellungskosten niederschlägt.

Durch die in den weiteren Ansprüchen aufgeführten Maßnahmen sind vorteilhafte Weiterbildungen und Verbesserungen der im Anspruch 1 angegebenen Handwerkzeugmaschine möglich.

Gemäß einer bevorzugten Ausführungsform der Erfindung weist die Fixiervorrichtung mindestens zwei am Motorgehäuse ausgebildete, um einen vorgegebenen Drehwinkel zueinander versetzt angeordnete Rippenpaare, deren radial sich erstreckende Rippen jeweils im Parallelabstand voneinander angeordnet sind, und einen am Drehkreuz schwenkbar gehaltenen Verriegelungsnocken auf, der zwischen jeweils einem Rippenpaar mit seitlichem Formschluß einzugreifen vermag. Der Verriegelungsnocken ist mit einem manuell schwenkbaren Sperrhebel starr verbunden, der aus dem drehbaren Gehäuseteil vorsteht.

Bei Handwerkzeugmaschinen, bei welchen der drehbare Gehäuseteil von dem Handgriff gebildet ist, der einen die Schalterleiste mit Abstand überziehenden Bügel aufweist, ist vorteilhaft der Sperrhebel im Querschnitt etwa U-förmig ausgebildet und so geformt, daß er in seiner Verriegelungsstellung den Bügel am Handgriff von dessen der Schalterleiste zugekehrten Seite her übergreift. Beim Lösen der Fixiervorrichtung schwenkt dann dieser Sperrhebel in Richtung auf die Schalterleiste und blockiert die zwischen Schalterleiste und Bügel befindlichen Durchgrifföffnung für die Griffhand des Benutzers, so daß dieser automatisch auf die nicht verriegelte Fixiervorrichtung aufmerksam gemacht wird.

### Zeichnung

Die Erfindung ist anhand eines in der Zeichnung dargestellten Ausführungsbeispiels in der nachfolgenden Beschreibung näher erläutert. Es zeigen:
- Fig. 1: eine Seitenansicht einer handgeführten elektrischen Winkelschleifmaschine,
- Fig. 2: eine vergrößerte Darstellung des Handgriffs mit Teilen des Motorgehäuses der Winkelschleifmaschine in Fig. 1, teilweise geschnitten,
- Fig. 3: einen Schnitt längs der Linie II-II in Fig. 2.

### Beschreibung des Ausführungsbeispiels

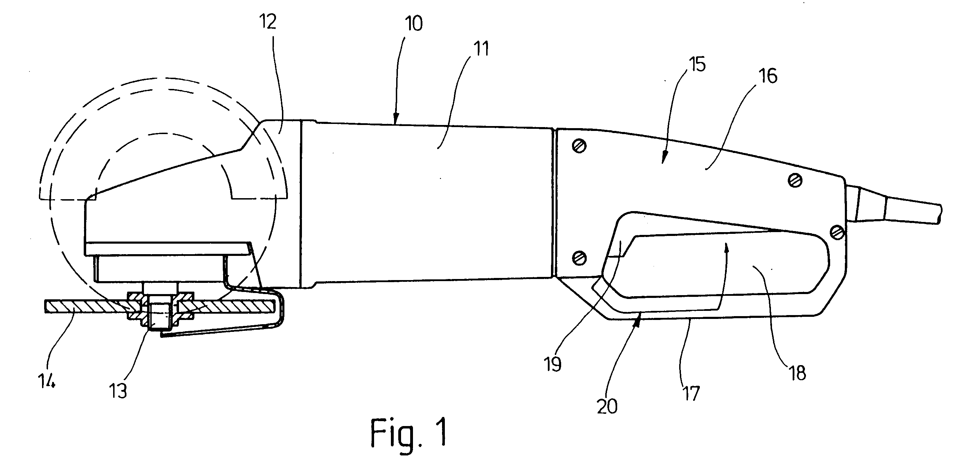

Die in Fig. 1 in Seitenansicht zu sehende handgeführte elektrische Winkelschleifmaschine als Ausführungsbeispiel für eine allgemeine elektrische Handwerkzeugmaschine weist ein Maschinengehäuse 10 auf, das in ein Motorgehäuse 11, in einen an der einen Gehäusestirnseite des Motorgehäuses 11 angeordneten Getriebekopf 12 mit vorstehender Antriebsspindel 13 für eine Schleifscheibe 14 und in einen an der anderen Gehäusestirnseite des Motorgehäuses 11 angeordneten Handgriff 15 unterteilt ist, der am Motorgehäuse 11 um dessen Längsachse über einen vorgegebenen Drehbereich drehbar ausgebildet ist. Der Handgriff 15 besteht aus einem Stielgriff 16, der beim Arbeiten mit der Winkelschleifmaschine von der Hand umschlossen wird, und aus einem daran einstückig angesetzten Bügel 17, der auf der Unterseite den Stielgriff 16 unter Belassung einer Durchgrifföffnung 18 überzieht und beim Arbeiten mit der Winkelschleifmaschine die um den Stielgriff 16 gelegten Finger nach unten schützend abdeckt. An der dem Bügel 17 zugekehrten Unterseite des Stielgriffs 16 ragt eine. Schalterleiste 19 in die Durchgriffsöffnung 18 hinein, die einen Ein- und Ausschalter für einen elektrischen Antriebsmotor betätigt, der im Motorgehäuse 11 untergebracht ist. Der Getriebekopf 12 ist fest mit dem Motorgehäuse 11 verbunden, während der am Motorgehäuse 11 drehbare Handgriff 15 mittels einer Fixiervorrichtung 20 am Motorgehäuse 11 in drei unterschiedlichen Drehstellungen festgelegt werden kann. In der in Fig. 1 dargestellten Relativlage von Motorgehäuse 11 und Handgriff 15 zueinander wird die Winkelschleifmaschine zum sog. Schrubben verwendet. In dieser Relativlage liegt die Schleifscheibe 14 in etwa parallel zur Schalterleiste 19. Aus dieser Schrubbstellung kann durch Drehen des Handgriffes 15 bzw. des Motorgehäuses 11 um 90° nach links oder rechts die Winkelschleifmaschine für den Arbeitsgang "Trennen" vorbereitet werden. Bei dieser Arbeitstellung der Winkelschleifmaschine behält in Fig. 1 der Handgriff 15 seine Lage bei und das Motorgehäuse 11 samt Getriebekopf 12 ist um 90° verdreht, so daß die Schleifscheibe 14 die in Fig. 1 strichliniert eingezeichnete Lage einnimmt, bei welcher sie etwa rechtwinklig zur Schalterleiste 19 ausgerichtet ist.

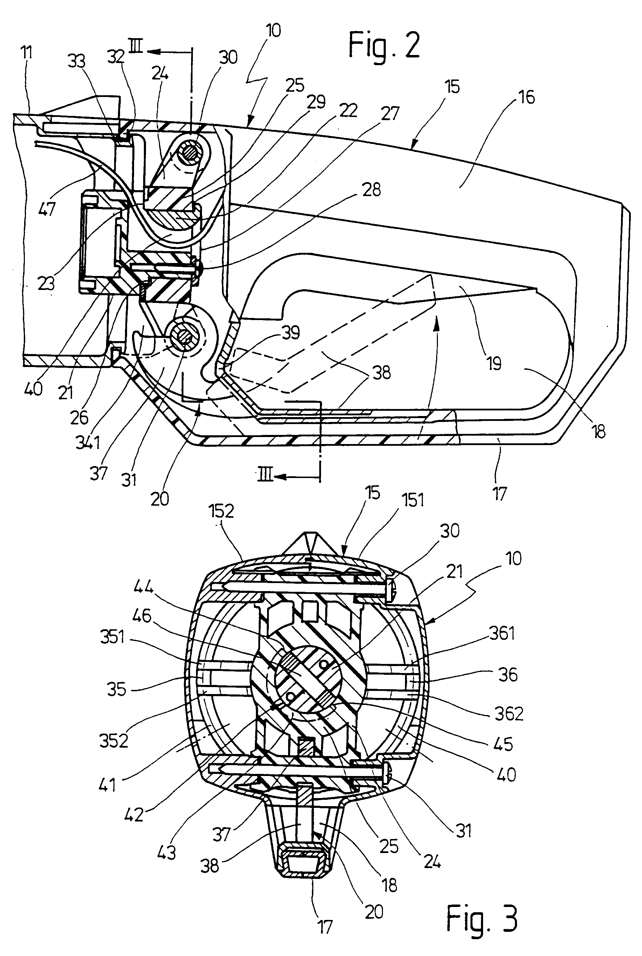

Einzelheiten der Fixiervorrichtungen 20 sowie der drehbeweglichen Halterung des Handgriffs 15 am Motorgehäue 11 sind in Fig. 2 und 3 dargestellt. An dem Motorgehäuse 11 ist ein zentraler Lagerzapfen 21 angespritzt, an dem ein Zapfenabschnitt 22 zum freien Ende im Durchmesser reduziert ist, wobei am Übergang vom Lagerzapfen 21 zum Zapfenabschnitt 22 eine Ringschulter 23 ausgebildet ist. Der Lagerzapfen 21 mit Zapfenabschnitt 22 besteht wie das Motorgehäuse 11 aus Kunststoff und ist an diesem beim Spritzvorgang gleich mit angeformt. Auf dem Zapfenabschnitt 22 des Lagerzapfens 21 ist ein Drehkreuz 24 mit einem Ringbund 25 drehbar und axial unverschiebbar aufgenommen. Der Ringbund 25 stützt sich dabei axial über eine Gleitscheibe 26 an der Ringschulter 23 des Lagerzapfens 21 ab und wird von einem Spannteller 27 axial unverschieblich gehalten. Der Spannteller 27 ist mittels Schrauben 28 auf die freie Stirnseite des Zapfenabschnitts 22 aufgeschraubt, wobei zwischen Spannteller 27 und Stirnseite des Ringbundes 25 am Drehkreuz 24 eine Tellerfeder 29 eingelegt ist. Das Drehkreuz 25 ist aus Kunststoff gefertigt und an dem aus zwei Gehäuseschalen 151 und 152 bestehenden Handgriff 15 mittels zweier Schrauben 30,31, die zugleich die beiden Gehäuseschalen 151,152 Zusammenhalten, angeschraubt. Zur staubdichten Abdeckung greifen die beiden Gehäuseschalen 151,152 mit einem radialen Vorsprung 32 in eine am Motorgehäuse 11 ausgebildete Umlaufnut 33 ein.

Die Fixiervorrichtung 20 weist drei am Motorgehäuse ausgeformte, jeweils um einen Drehwinkel von 90° zueinander versetzte Rippenpaare 34,35,36 auf, deren Rippen im Parallelabstand voneinander angeordnet sind und radial verlaufen. In Fig. 3 sind die Rippen 351,352 und 361,362 der Rippenpaare 35,36 und in Fig. 2 nur die Rippen 341 des Rippenpaares 34 zu sehen. Ferner gehört zur Fixiervorrichtung 20 ein am Drehkreuz 24 schwenkbar gehaltener Verriegelungsnocken 37, dessen axiale Breite dem lichten Abstand zwischen den Rippen der Rippenpaare 34 - 36 entspricht, so daß er mit seitlichem Formschluß zwischen die Rippenpaare 34 - 36 eingeschwenkt werden kann. Der Verriegelungsnocken 37 ist einstückig mit einem manuell schwenkbaren Sperrhebel 38 verbunden, der durch eine Aussparung 39 in den beiden Gehäuseschalen 151,152 hindurch und in die Durchgrifföffnung 18 des Handgriffs 15 hineinragt. Der Sperrhebel 38 ist im Querschnitt etwa U-förmig ausgebildet, und so geformt, daß er in seiner Verriegelungsstellung, in welcher der Verriegelungsnocken 37 zwischen die Rippen eines der Rippenpaare 34 - 36 formschlüssig eingreift, den Bügel 17 von dessen der Schalterleiste 19 zugekehrten Seite her übergreift. Beim Lösen der Fixiervorrichtung 20 wird der Sperrhebel 38 in Pfeilrichtung in Fig. 1 und 2 geschwenkt und ragt in die Durchgrifföffnung 18 im Handgriff 15 hinein (strichlinierte Darstellung des Sperrhebels 38 in Fig. 2). Damit ist die Durchgrifföffnung 18 für das Durchgreifen mit der Griffhand blockiert, und der Benutzer wird auf die entriegelte Fixiervorrichtung (20) automatisch aufmerksam gemacht. Zwischen den Rippenpaaren 34,35,36 ist jeweils ein in Drehrichtung des Drehkreuzes 24 koaxial zu diesem verlaufendes Ringsegment 40 bzw. 41 so angeordnet, daß der aus seiner Verriegelungsstellung ausgeschwenkte Verriegelungsnocken 37 beim Drehen des Handgriffs 15 bzw. des Motorgehäuses 11 mit geringem Abstand an diesen Ringsegmenten 40,41 entlanggleitet und nicht zurückgeschwenkt werden kann. Damit wird verhindert, daß der Sperrhebel 38 außerhalb der vorbestimmten Verriegelungsstellungen auf den Bügel 17 des Handgriffs 15 aufgeschwenkt werden kann und damit ein Drehen des Verriegelungsnockens 37 vor die Rippen der Rippenpaare 34 - 36 blockiert ist.

Zur Begrenzung der Drehbeweglichkeit des Handgriffs 15 und zur gleichzeitigen automatischen Einstellung der 90° Drehstellungen des Handgriffs 15 ist am Lagerzapfen 21 ein radial wegstehender Anschlagnocken 42 (Fig. 3) angeordnet und im Ringbund 25 eine über 180° sich erstreckende ringförmige Ausnehmung 43 vorgesehen, in welche der Anschlagnocken 42 hineinragt. Die ringförmige Ausnehmung 43 hat dabei eine solche Anordnung, daß beim Anschlag einer der beiden radialen Begrenzungsflächen 44 bzw. 45 der Ausnehmung 43 an dem Anschlagnocken 42 der am Drehkreuz 24 schwenkbeweglich gehaltene Verriegelungnocken 37 automatisch mit einem der Rippenpaare 35,36 am Motorgehäuse 11 fluchtet. Die Rippenpaare 34 - 36 dienen zugleich der Abstützung des zentralen Lagerzapfens 21 am Motorgehäuse 11. Der Lagerzapfen 21 weist einen axialen Durchbruch 46 auf, durch welche das elektrische Verbindungskabel 47 von dem von der Schalterleiste 19 betätigten Ein- und Ausschalter zum Antriebsmotor hindurchgeführt ist.

## Patentansprüche

1. Handwerkzeugmaschine, insbesondere handgeführte Winkelschleifmaschine, mit einem Maschinengehäuse (10), das in ein einen elektrischen Antrieb aufnehmendes Motorgehäuse (11), in einen an der einen Stirnseite des Motorgehäuses (11) angeordneten Getriebekopf (12) mit vorstehender Antriebsspindel (13) für ein Werkzeug und in einen an der anderen Stirnseite des Motorgehäuses (11) angeordneten Handgriff (15) mit einer Schalterleiste (19) zum Ein- und Ausschalten des elektrischen Antriebs unterteilt ist, wobei entweder der Handgriff (15) oder der Getriebekopf (12) als drehbarer Gehäuseteil relativ zum Motorgehäuse (11) um dessen Längsachse drehbar ausgebildet ist, und mit einer manuell betätigbaren Fixiervorrichtung (20) zum Festsetzen des drehbaren Gehäuseteils in mindestens zwei unterschiedlichen Drehstellungen, wobei am Motorgehäuse (10) ein zentraler Lagerzapfen (21) ausgeformt ist, auf dem ein Drehkreuz (24) axial unverschieblich und drehbar aufgenommen ist, das Drehkreuz (24) mit dem drehbaren Gehäuseteil (15) fest verbunden ist und die Fixiervorrichtung (20) eine formschlüssige Verriegelung zwischen Motorgehäuse (11) und Drehkreuz (24) bewirkt.

2. Maschine nach Anspruch 1, dadurch gekennzeichnet, daß die Fixiervorrichtung (20) mindestens zwei am Motorgehäuse (10) ausgeformte, um einen vorbestimmten Drehwinkel zueinander versetzter Rippenpaare (34,35,36), deren Rippen (341,351,352,361,362) im Parallelabstand voneinander angeordnet sind und radial verlaufen, und einen am Drehkreuz (24) schwenkbar gehaltenen Verriegelungsnocken (37) aufweist, der zwischen jeweils den Rippen (341,351,352,361,362) eines jeden Rippenpaares (34,35,36) mit seitlichem Formschluß einzugreifen vermag und mit einem aus dem drehbaren Gehäuseteil (15) vorstehenden, manuell betätigbaren Sperrhebel (38) starr verbunden ist.

3. Maschine nach Anspruch 2, dadurch gekennzeichnet, daß zwischen den mindestens zwei Rippenpaaren (34,35,36) ein in Drehrichtung des Drehkranzes (24) verlaufendes Ringsegment (40,41) so angeordnet ist, daß der aus seiner Verriegelungsstellung ausgeschwenkte Verriegelungsnocken (37) beim Drehen des drehbaren Gehäuseteils (15) mit geringem Abstand an dem Ringsegment (40,41) entlanggleitet und an einer Rückschwenkbewegung gehindert ist.

4. Maschine nach Anspruch 2 oder 3, dadurch gekennzeichnet, daß der drehbare Gehäuseteil der Handgriff (15) ist, der einen die Schalterleiste (19) mit Abstand überziehenden Bügel (17) aufweist, und daß der Sperrhebel (38) im Querschnitt etwa U-förmig ausgebildet und so geformt ist, daß er in seiner Verriegelungsstellung den Bügel (17) von dessen der Schalterleiste (19) zugekehrten Seite her übergreift.

5. Maschine nach einem der Ansprüche 1 - 4, dadurch gekennzeichnet, daß das Drehkreuz (24) auf dem Lagerzapfen (21,22) mit einem Ringbund (25) sitzt, der sich über eine Gleitscheibe (26) an einer Ringschulter (23) des Lagerzapfens (22) axial abstützt, daß auf der freien Stirnseite des Lagerzapfens (21) ein Spannteller (27) befestigt ist und daß eine Tellerfeder (29) sich zwischen Spannteller (27) und Ringbund (25) des Drehkreuzes (24) abstützt.

6. Maschine nach einem der Ansprüche 1 - 5, dadurch gekennzeichnet, daß am Lagerzapfen (21) ein radial wegstehender Anschlagnocken (42) angeordnet ist und daß der Ringbund (25) eine ringförmige Ausnehmung (43) aufweist, in welche der Anschlagnocken (42) hineinragt und die eine solche Länge und Anordnung hat, daß beim Anschlag einer der beiden radialen Begrenzungsflächen (44,45) der Ausnehmung (43) an dem Anschlagnocken (42) der am Drehkreuz (24) schwenkbar gehaltene Verriegelungsnocken (37) mit einem der Rippenpaare (35,36) am Motorgehäuse (11) zum Einschwenken zwischen dessen Rippen (351,352,361,362) fluchtet.

7. Maschine nach einem der Ansprüche 1 - 6, dadurch gekennzeichnet, daß der Lagerzapfen (21) einen axialen Durchbruch (46) zum Durchführen eines Anschlußkabels (47) für die Schalterleiste (19) aufweist.

## Claims

1. Hand machine tool, particularly a hand-guided angle grinding machine, having a machine casing (10) which is subdivided into a motor casing (11) holding an electric drive, into a gear head (12) arranged on one end face of the motor casing (11) and having a projecting drive spindle (13) for a tool, and into a handle (15) arranged on the other end face of the motor casing (11) and having a switch bar (19) for switching the electric drive on and off, either the handle (15) or the gear head (12) being in the form of a rotatable casing part rotatable relative to the motor casing (11) about the longitudinal axis of the latter, and having a manually operable fastening device (20) for securing the rotatable casing part in at least two different rotational positions, wherein on the motor casing (10) a central bearing pin (21) is formed, on which a spider (24) is mounted to be rotatable but axially immovable thereon, said spider (24) being made fast to the rotatable casing part (15) and the fastening device (20) effecting positive locking between the motor casing (11) and the spider (24).

2. Machine according to Claim 1, characterized in that the fastening device (20) has at least two pairs of ribs (34, 35, 36) which are formed on the motor casing (10) and are offset at a predetermined rotation angle in relation to one another and whose ribs (341, 351, 352, 361, 362) are arranged parallel to one another and spaced apart and extend radially, and also has a locking cam (37) which is held so as to be pivotable on the spider (24), is able to engage with positive lateral locking between the respective ribs (341, 351, 352, 361, 362) of each pair of ribs (34, 35, 36), and is rigidly joined to a manually operable locking lever (38) projecting out of the rotat- able casing part (15).

3. Machine according to Claim 2, characterized in that between the at least two pairs of ribs (34, 35, 36) a ring segment (40, 41) extending in the direction of rotation of the spider (24) is arranged such that on the rotation of the rotatable casing part (15) the locking cam (37) pivoted out of its locking position slides along the ring segment (40, 41) at a short distance therefrom and is prevented from making a backward pivoting movement.

4. Machine according to Claim 2 or 3, characterized in that the rotatable casing part is the handle (15) which has a bow (17) covering the switch bar (19) at a distance therefrom, and in that the locking lever (38) has in cross-section an approximately U-shaped configuration and is so shaped that in its locking position it overlaps the bow (17) from that side of the latter that faces the switch bar (19).

5. Machine according to one of Claims 1 to 4, characterized in that the spider (24) is mounted on the bearing pin (21, 22) by means of an annular collar (25) which is supported axially by means of a sliding disc (26) against an annular shoulder (23) on the bearing pin (22), in that on the free end face of the bearing pin (21) a clamp plate (27) is fastened, and in that a cup spring (29) is supported between the clamp plate (27) and the annular collar (25) of the spider (24).

6. Machine according to one of Claims 1 to 5, characterized in that on the bearing pin (21) a radially projecting stop cam (42) is arranged, and in that the annular collar (25) has an annular recess (43) into which the stop cam (42) projects and which has a length and is arranged such that when one of the two radial boundary surfaces (44, 45) of the recess (43) strikes against the stop cam (42) the locking cam (37) held pivotally on the spider (24) comes into alignment with one of the pairs of ribs (35, 36) on the motor casing (11) so as to pivot inwards between its ribs (351, 352, 361, 362).

7. Machine according to one of Claims 1 to 6, characterized in that the bearing pin (21) has an axial aperture (46) for the passage of a connection cable (47) for the switch bar (19).

## Revendications

1. Outil électrique à main, en particulier meuleuse d'angle comprenant :
- un boîtier (10) se décomposant d'une part en un boîtier moteur (11) contenant un moteur électrique entraînant une tête mécanique (12) située sur la face frontale du boîtier (11) et d'où dépasse une broche (13) recevant l'outil, d'autre part en une poignée (15) située sur l'autre face frontale du boîtier (11) et équipée d'une barrette de commande d'un contacteur d'alimentation du moteur,
- la poignée (15) ou la tête mécanique (12) constitue par rapport au boîtier moteur (11) et autour de l'axe longitudinal de celui-ci, une partie tournante,
- un dispositif de blocage (20), actionnable à la main, permettant de bloquer la partie tournante dans au moins deux positions de rotation différentes et présentant les caractéristiques suivantes :
- le boîtier moteur (10) est équipé, par moulage en relief, d'un palier central de rotation (21) sur lequel peut tourner, sans coulisser, un tourniquet (24),
- le tourniquet (24) est solidaire de la partie tournante,
- le dispositif de fixation (20) assure un verrouillage par combinaison de formes, entre le boîtier moteur (11) et le tourniquet (24).

2. Outil électrique selon la revendication 1, caractérisé en ce que le dispositif de blocage (20) comporte :
- au moins deux paires de nervures (34, 35, 36) moulées en relief sur le boîtier moteur (10), présentant entre elles un écart angulaire donné, ces nervures radiales (341, 351, 352, 361, 362) étant parallèles et espacées deux par deux,
- une came de verrouillage (37) pouvant pivoter sur un tourniquet (24) de manière à venir se verrouiller latéralement par combinaison de formes, entre les nervures de chacune des paires (34, 35, 36),
- un levier de blocage (38), dépassant de la partie pivotante du boîtier (15) et manoeuvrable à la main, est solidaire de la came (37).

3. Outil électrique selon la revendication 2, caractérisé en ce qu'entre au moins deux paires de nervures (34, 35, 36), il est prévu un segment annulaire coaxial au tourniquet (24) disposé de manière que la came de verrouillage, une fois écartée de sa position active glisse, lorsqu'on manoeuvre la partie tournante (15), le long et près du segment annulaire (40, 41) et ne peut donc basculer en retour.

4. Outil électrique selon la revendication 2 ou 3, caractérisé en ce que la partie tournante est constituée par la poignée (15) qui comporte un étrier (17) recouvrant à une certaine distance la barrette de commande (19), le levier de blocage (38), de section transversale sensiblement en U, ayant une forme telle que dans sa position de blocage, il recouvre la face de l'étrier opposée à la barrette de commande (19).

5. Outil électrique selon une des revendications 1 à 4, caractérisé en ce que le tourniquet (24) est monté sur le palier de pivotement (21, 22) par un collet annulaire (25) en appui axial sur une bague de glissement (26) placée contre l'épaulement annulaire (23) du palier (22) sur l'extrémité frontale duquel est fixée une rondelle de maintien (27) retenant une rondelle Belleville (29) entre elle et le collet annulaire (25) du tourniquet (24)

6. Outil électrique selon une des revendications 1 à 5, caractérisé en ce que le palier de pivotement (21) porte un ergot de butée (42) dépassant, pénétrant dans un évidement (43) du côté annulaire (25), la longueur et la position de cet ergot étant telles que, si une des parois radiales (44, 45) délimitant l'évidement (43) est en butée sur l'ergot (42), la came de verrouillage (27) portée par le tourniquet (24) se trouve alors alignée avec une des paires de nervures (35, 36) du boîtier moteur (11) et peut donc venir s'engager par basculement entre ces nervures (351, 352, 361, 362).

7. Outil électrique selon une des revendications 1 à 6, caractérisé en ce que le palier de pivotement (21) est percé d'une ouverture axiale (46) servant de passage au câble électrique (47) raccordé à la barrette de commande (19).
